# EUROPÄISCHE PATENTANMELDUNG

(11) **EP 0 826 898 A1**
(43) Veröffentlichungstag der Anmeldung: **04.03.1998**
(21) Anmeldenummer: 97113648.6
(22) Anmeldetag: 07.08.1997
(51) Int. Cl.: F16F 9/02

(54) **Vorrichtung zur Überwindung von Reibungs- und Temperatureinflüssen an Gasfedern**

(30) Priorität: 28.08.1996 DE 19634680
(71) Anmelder: AL-KO KOBER AG, D-89359 Kötz (DE)
(72) Erfinder: Reichel, Johannes, Dipl.-Ing., 04736 Waldheim (DE); Gerlach, Rainer, Dr.-Ing., 09127 Chemnitz (DE)
(74) Vertreter: Munk, Ludwig, Dipl.-Ing.

(57) **Zusammenfassung**

Die Erfindung betrifft eine Vorrichtung zur Überwindung von Reibungs- und Temperatureinflüssen an Gasfedern, die zwei Arbeitszylinder aufweisen, wobei die Wirkungsweise des ersten, eigentlichen Arbeitszylinders durch den zweiten, zusätzlichen Arbeitszylinder unterstützt wird. Aufgabe der Erfindung ist es, eine zum statischen Kraftausgleich geeignete Gasfeder, insbesondere eine bahngeführte Gasfeder, zu schaffen, die mindestens die Überwindung der Systemreibung und der infolge Temperaturänderung auftretenden Kraftunterschiede ermöglicht. Die Aufgabe wird dadurch gelöst, daß der zusätzliche Arbeitszylinder (4) parallel und mittig zum ersten Arbeitszylinder (1) angeordnet ist und eine von außen und unabhängig vom Druck im ersten Arbeitszylinder (1) betätigbare Gasfüllvorrichtung (6) und Gasablaßvorrichtung (7) aufweist.

## Beschreibung

Die Erfindung betrifft eine Vorrichtung zur Überwindung von Reibungs- und Temperatureinflüssen an Gasfedern, die zwei Arbeitszylinder aufweisen, wobei die Wirkungsweise des ersten, eigentlichen Arbeitszylinders der Gasfeder durch einen zweiten zusätzlichen Arbeitszylinder unterstützt wird.

Als Stand der Technik sind bereits verschiedenartige Konstruktionen von Gasfedern mit zwei Zylindern bekannt. Hierbei ist überwiegend ein Zylinder als eigentlicher Arbeitszylinder ausgestattet, desses Wirkungsweise durch den zweiten, zusätzlichen Arbeitszylinder unterstützt wird. Die bekannten Anwendungen solcher Gasfedern mit zwei Arbeitszylindern beziehen sich beispielsweise auf in Reihe angeordnete Arbeitszylinder zur Arbeitsvolumenvergrößerung (DE 41 27 453 A1), zur Änderung der Gasfederkennlinie (DE 40 25 255 A1), zur Längenänderung der Gasfeder (DE 32 25 974 A1) und zur Entgegenwirkung von Temperatureinflüssen (DE 34 32 604 A1).

In der Offenlegungsschrift DE 43 14 227 A1 wird mit Fig. 5 auf die Möglichkeit des statischen Lastausgleichs einer Masse lediglich durch Überwindung der Systemreibung eingegangen, indem der Druck im Arbeitszylinder der bahngeführten Ausgleichsgasfeder von außen erhöht oder abgesenkt wird.

Aufgabe der Erfindung ist es, eine zum statischen Ausgleich geeignete Gasfeder, insbesondere die bahngeführte Gasfeder, zu schaffen, die mindestens die Überwindung der Systemreibung und der infolge der Temperaturänderung auftretenden Kraftunterschiede ermöglicht.

Diese Aufgabe wird erfindungsgemäß gelöst, indem der zusätzliche Arbeitszylinder parallel und mittig zum ersten Arbeitszylinder angeordnet ist und eine, von außen und unabhängig vom Druck im ersten Arbeitszylinder betätigbare Gasfüllvorrichtung und Gasablaßvorrichtung aufweist. Hierbei ist vorgesehen, daß der zusätzliche Arbeitszylinder an seinen Stirnseiten einerseits mit der Kolbenstange im ersten Arbeitszylinder fest verbunden und andererseits gegenüber der Mantelfläche des ersten Arbeitszylinders abgedichtet ist.

Durch Anwendung der vorgeschlagenen Vorrichtung können Systemreibung und temperaturbedingte Kraftunterschiede an Gasfedern überwunden werden. Dies wird erreicht, indem die Gasmenge im zusätzlichen Arbeitszylinder, der die Wirkungsweise des eigentlichen Arbeitszylinders unterstützt, durch Druckaufbringung oder Druckabsenkung von außen verändert wird. Die kompakte Bauweise dieser Vorrichtung ergibt zahlreiche Einsatzmöglichkeiten.

Ein Ausführungsbeispiel ist in der Zeichnung dargestellt und wird nachfolgend beschrieben. Es zeigen:
- Figur 1 und Figur 2: den grundsätzlichen Aufbau der erfindungsgemäßen Vorrichtung,
- Figur 3 bis Figur 5: die Anwendung der Vorrichtung zur Abstützung einer Klappe.

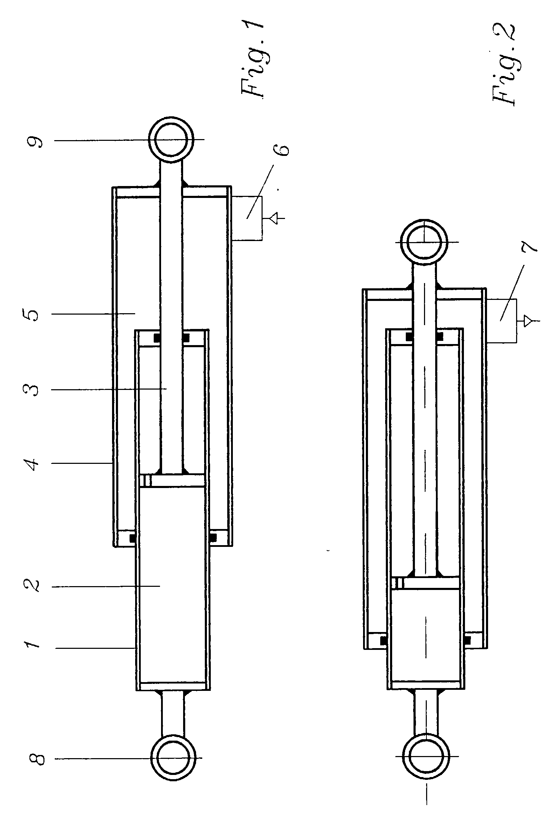

Figur 1: Die Gasfeder besteht aus einem ersten Arbeitszylinder 1 mit dem Arbeitsvolumen 2, einer Kolbenstange mit Kolben 3 und den Gasfederanlenkpunkten 8 und 9. Ein zusätzlicher Arbeitszylinder 4 ist mittig zum ersten Arbeitszylinder angeordnet und mit der Kolbenstange 3 fest verbunden sowie gegenüber der Mantelfläche des Arbeitszylinders 1 abgedichtet und besitzt darüber hinaus eine Gasfüllvorrichtung 6 und eine Gasablaßvorrichtung 7.

Wirken in den Gasfederanlenkpunkten 8 und 9 die für das statische Gleichgewicht im Ausgleichssystem notwendigen Gasfederkräfte, so kann durch Druckerhöhung im Arbeitszylinder 4 mit der Gasfüllvorrichtung 6 mindestens die Systemreibung und / oder der Kraftunterschied infolge Temperaturabsenkung überwunden werden.

Figur 2: Wirken in den Gasfederanlenkpunkten 8 und 9 die für das statische Gleichgewicht im Ausgleichssystem notwendigen Gasfederkräfte, so kann durch Druckabsenkung im Arbeitszylinder 4 mit der Gasablaßvorrichtung 7 mindestens die Systemreibung und / oder der Kraftunterschied infolge Temperaturerhöhung überwunden werden.

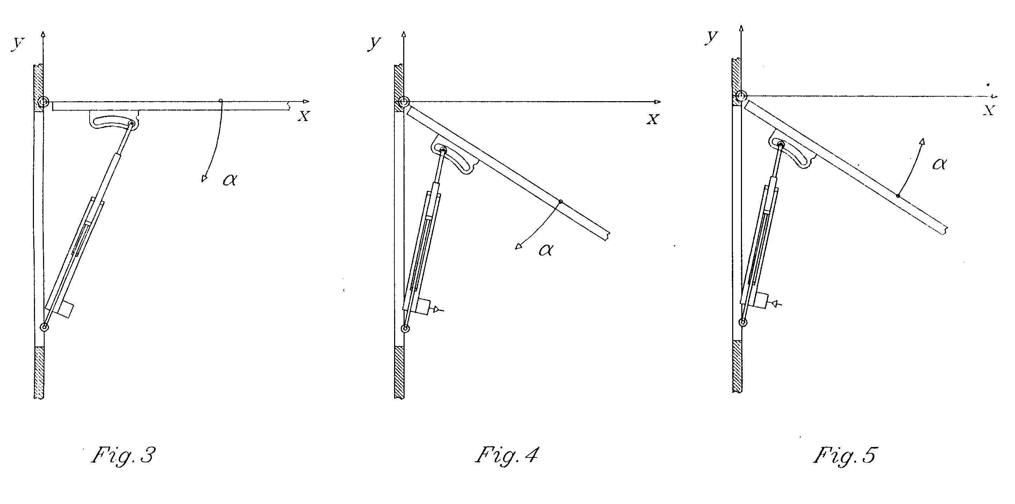

Figur 3: Der statische Ausgleich der Klappe wird durch die regelbare kurbelbahngeführte Gasfeder für alle Klappenwinkel (0° > = α > = -90°) realisiert. Dabei übernimmt der innere Arbeitszylinder (Arbeitszylinder 1 nach Figur 1) den Hauptteil des Lastausgleichs z.B. 80% und der äußere Arbeitszylinder (Arbeitszylinder 4 nach Figur 1) die restlichen 20% des Lastausgleichs.

Figur 4: Drucksenkung im äußeren Arbeitszylinder der regelbaren Gasfeder führt zur Absenkung der Klappe, nachdem die Systemreibung und / oder der Kraftunterschied infolge Temperaturänderung überwunden und der Anteil der 20%igen Lastausgleichs unterschritten wurde.

Figur 5: Druckerhöhung im äußeren Arbeitszylinder der regelbaren Gasfeder führt zur Anhebung der Klappe, nachdem die Systemreibung und / oder der Kraftunterschied infolge Temperaturänderung überwunden und der Anteil des 20%igen Lastausgleichs überschritten wurde.

## Patentansprüche

1. Vorrichtung zur Überwindung von Reibungs- und Temperatureinflüssen an Gasfedern, die zwei Arbeitszylinder aufweisen, wobei die Wirkungsweise des ersten, eigentlichen Arbeitszylinders durch den zweiten, zusätzlichen Arbeitszylinder unterstützt wird, **dadurch gekennzeichnet, daß** der zusätzliche Arbeitszylinder (4) parallel und mittig zum ersten Arbeitszylinder (1) angeordnet ist und eine, von außen und unabhängig vom Druck im ersten Arbeitszylinder (1) betätigbare Gasfüllvorrichtung (6) und Gasablaßvorrichtung (7) aufweist.

2. Vorrichtung nach Anspruch 1, **dadurch gekennzeichnet, daß** der zusätzliche Arbeitszylinder (4) an seinen Stirnseiten einerseits mit der Kolbenstange (3) im ersten Arbeitszylinder (1) fest verbunden und andererseits gegenüber der Mantelfläche des ersten Arbeitszylinder (1) abgedichtet ist.
